# EUROPÄISCHE PATENTANMELDUNG

(11) **EP 2 905 875 A1**
(43) Veröffentlichungstag der Anmeldung: **12.08.2015**
(21) Anmeldenummer: 14154478.3
(22) Anmeldetag: 10.02.2014
(51) Int. Cl.: H02K 3/28

(54) **Hauptelement einer elektrischen Maschine**

(71) Anmelder: Siemens Aktiengesellschaft, 80333 München (DE)
(72) Erfinder: Al-Khafaji, Hayder, 90453 Nürnberg (DE); Hetterich, Manfred, 91575 Windsbach (DE)

(57) **Zusammenfassung**

Die Erfindung betrifft ein Hauptelement (400) einer elektrischen Maschine. Das Hauptelement (400) umfasst mehrere Wicklungsstränge (100, 200, 300) mit elektrisch leitfähig miteinander verbundenen elektrischen Spulen (101, 102, 201, 202, 301, 302) und einen Wickelkern (K), der erste Nuten (1, 3, 4, 6, 7, 9), durch die jeweils genau eine Spule (101, 102, 201, 202, 301, 302) verläuft, und zweite Nuten (2, 5, 8), durch die jeweils genau zwei verschiedene Spulen (101, 102, 201, 202, 301, 302) verlaufen, aufweist. Jede Spule (101, 102, 201, 202, 301, 302) eines jeden Wicklungsstrangs (100, 200, 300) ist entweder eine erste Spule (101, 201, 301), die durch zwei erste Nuten (1, 3, 4, 6, 7, 9) verläuft, oder eine zweite Spule (102, 202, 302), die durch zwei zweite Nuten (2, 5, 8) verläuft.

## Beschreibung

Die Erfindung betrifft ein Hauptelement einer elektrischen Maschine, das mehrere Wicklungsstränge mit elektrisch leitfähig miteinander verbundenen elektrischen Spulen und einen Wickelkern mit nebeneinander aufgereihten Nuten, durch die Spulen der Wicklungsstränge verlaufen, umfasst.

Unter einem Hauptelement einer elektrischen Maschine wird ein Stator oder ein Rotor der elektrischen Maschine verstanden. Eine elektrische Spule besteht aus mehreren unmittelbar neben- und/oder übereinander angeordneten und miteinander elektrisch in Reihe geschalteten Windungen elektrischer Leiter oder aus neben- und/oder übereinander angeordneten Windungen so genannter kombinierter elektrischer Teilleiter, die elektrisch parallel geschaltet sind und gleich oder bezüglich ihrer geometrischen Struktur und/oder ihrer Durchmesser unterschiedlich gestaltet sind. Unter einem Wicklungsstrang werden miteinander elektrisch in Reihe und/oder parallel geschaltete Spulen verstanden, die zur Speisung mit phasengleichen Strömen vorgesehen sind. Eine Wicklungsanordnung eines Hauptelements einer mehrphasigen elektrischen Maschine weist daher eine mit der Phasenanzahl übereinstimmende Anzahl von Wicklungssträngen auf, wobei jeder Wicklungsstrang mit einem Außenleiter verbunden ist.

Die einzelnen Spulen eines Wicklungsstrangs eines Hauptelements sind häufig in Nuten eines Wickelkerns des Hauptelements, beispielsweise in Nuten eines Ständerblechpakets, verteilt, so dass jede Spule durch zwei Nuten verläuft. Die Nuten sind dabei in der Regel in einer Reihe nebeneinander in einer Oberfläche angeordnet, die einem Luftspalt zwischen einem Stator und einem Rotor der elektrischen Maschine zugewandt ist. Die beiden von einer Spule durchlaufenen Nuten können unmittelbar benachbart sein oder zwischen ihnen können sich Nuten liegen, durch die andere Spulen verlaufen (so genannte verteilte Wicklung). Ferner kann eine Wicklungsanordnung als eine so genannte Einschichtwicklung, bei der durch jede Nut nur genau eine Spule verläuft, oder als eine so genannte Zweischichtwicklung, bei der durch jede Nut genau zwei verschiedene Spulen verlaufen, ausgeführt sein.

Bei einer Zweischichtwicklung können die beiden durch eine Nut verlaufenden Spulen demselben Wicklungsstrang oder verschiedenen Wicklungssträngen angehören. In der Regel ist das Volumen jeder Nut dabei durch eine elektrisch isolierende Trennwand in zwei etwa gleich große Bereiche geteilt, durch die jeweils eine der beiden durch die Nut verlaufenden Spulen verläuft. Ein erster dieser Bereiche erstreckt sich von dem Nutgrund der Nut bis zur Trennwand und enthält die so genannte Unterschicht der Nut, die von der durch den ersten Bereich verlaufenden Spule gebildet wird. Der zweite Bereich erstreckt sich von der Trennwand bis zu der Öffnung der Nut in der Oberfläche des Wickelkerns und enthält die so genannte Oberschicht der Nut, die von der durch den zweiten Bereich verlaufenden Spule gebildet wird. Üblicherweise bildet jede Spule einer Zweischichtwicklung eine Unterschicht einer ersten Nut, durch die sie verläuft, und eine Oberschicht der zweiten Nut, durch die sie verläuft.

Bei einer verteilten Zweischichtwicklung müssen die Spulen in der Regel aufgrund ihrer Spulenüberlappung einzeln angelegt werden. Eine Spule wird dabei beispielsweise maschinell eingezogen. Unter dem so genannten Einziehen einer Spule versteht man dabei, dass eine, beispielsweise mit Hilfe einer Schablone, lose vorgewickelte Spule in einem Arbeitsgang in Nuten eingezogen wird.

Der Erfindung liegt die Aufgabe zugrunde, ein verbessertes Hauptelement einer elektrischen Maschine anzugeben, das mehrere Wicklungsstränge umfasst. Ferner liegt der Erfindung die Aufgabe zugrunde, ein Verfahren zur Herstellung eines derartigen Hauptelements anzugeben.

Die Aufgabe wird erfindungsgemäß hinsichtlich des Hauptelements durch die Merkmale des Anspruchs 1 und hinsichtlich des Verfahrens zur Herstellung eines Hauptelements durch die Merkmale des Anspruchs 11 gelöst.

Vorteilhafte Ausgestaltungen der Erfindung sind Gegenstand der Unteransprüche.

Ein erfindungsgemäßes Hauptelement einer elektrischen Maschine umfasst mehrere Wicklungsstränge mit elektrisch leitfähig miteinander verbundenen elektrischen Spulen und einen Wickelkern mit nebeneinander aufgereihten Nuten, durch die Spulen der Wicklungsstränge verlaufen. Dabei weist der Wickelkern erste Nuten, durch die jeweils genau eine Spule verläuft, und zweite Nuten, durch die jeweils genau zwei verschiedene Spulen verlaufen, auf. Ferner ist jede Spule eines jeden Wicklungsstrangs entweder eine erste Spule, die durch zwei erste Nuten verläuft, oder eine zweite Spule, die durch zwei zweite Nuten verläuft, und jeder Wicklungsstrang weist wenigstens eine erste Spule und wenigstens eine zweite Spule auf.

Ein erfindungsgemäßes Hauptelement weist also eine Wicklungsanordnung mit mehreren Wicklungssträngen auf, deren Spulen auf als "Einschichtnuten" ausgebildete erste Nuten und als "Zweischichtnuten" ausgebildete zweite Nuten verteilt sind. Dies ermöglicht vorteilhaft, die Spulen der Wicklungsstränge derart anzuordnen, dass mehrere oder alle Spulen eines Wicklungsstrangs gleichzeitig eingezogen werden können. Dadurch kann die Herstellung eines Hauptelements erheblich vereinfacht und verbilligt werden.

Eine Ausgestaltung der Erfindung sieht genau drei Wicklungsstränge vor, wobei jede zweite Spule jedes Wicklungsstrangs eine Oberschicht einer der beiden zweiten Nuten, durch die sie verläuft, und eine Unterschicht der anderen der beiden zweiten Nuten, durch die sie verläuft, bildet.

Eine weitere Ausgestaltung der Erfindung sieht genau drei Wicklungsstränge vor, wobei jede zweite Spule eines ersten Wicklungsstrangs die Unterschichten der beiden zweiten Nuten, durch die sie verläuft, bildet, jede zweite Spule eines zweiten Wicklungsstrangs eine Oberschicht einer der beiden zweiten Nuten, durch die sie verläuft, und eine Unterschicht der anderen der beiden zweiten Nuten, durch die sie verläuft, bildet, und jede zweite Spule des dritten Wicklungsstrangs die Oberschichten der beiden zweiten Nuten, durch die sie verläuft, bildet.

Durch diese Verteilung der zweiten Spulen der drei Wicklungsstränge können vorteilhaft zunächst gleichzeitig die zweiten Spulen des ersten Wicklungsstrangs, danach gleichzeitig die zweiten Spulen des zweiten Wicklungsstrangs und schließlich gleichzeitig die zweiten Spulen des dritten Wicklungsstrangs eingezogen werden.

Vorzugsweise verläuft dabei jede erste Spule eines jeden Wicklungsstrangs durch ein Nutenpaar zweier erster Nuten, zwischen denen mindestens zwei weitere erste Nuten und mindestens zwei zweite Nuten liegen, und jede zweite Spule eines jeden Wicklungsstrangs verläuft durch zwei zweite Nuten, die zwischen zwei ersten Nuten eines Nutenpaares liegen, durch das eine erste Spule desselben Wicklungsstrangs verläuft.

Dadurch können vorteilhaft die ersten Spulen eines Wicklungsstrangs gleichzeitig mit den zweiten Spulen des Wicklungsstrangs eingezogen werden.

Ferner liegen vorzugsweise die weiteren ersten Nuten, die zwischen den beiden ersten Nuten eines Nutenpaares liegen, durch das eine erste Spule eines Wicklungsstrangs verläuft, jeweils zwischen den beiden zweiten Nuten, die zwischen den beiden ersten Nuten des Nutenpaares liegen. Ferner werden die beiden weiteren ersten Nuten von ersten Spulen zweier verschiedener Wicklungsstränge durchlaufen, die sich außerdem von demjenigen Wicklungsstrang unterscheiden, dem die das Nutenpaar durchlaufende erste Spule angehört.

Durch diese Verteilung von Spulen auf Nuten, die unten anhand von Ausführungsbeispielen detailliert dargestellt wird, wird vorteilhaft eine räumlich gleichmäßige Verteilung der Spulen der drei Wicklungsstränge erreicht, die es dennoch gestattet, alle Spulen eines Wicklungsstrangs gleichzeitig einzuziehen.

Eine weitere Ausgestaltung der Erfindung sieht vor, dass in jeder zweiten Nut zwischen den beiden zweiten Spulen, die durch sie verlaufen, eine elektrisch isolierende Trennwand angeordnet ist.

Dadurch werden die beiden durch eine zweite Nut verlaufenden zweiten Spulen vorteilhaft elektrisch voneinander isoliert.

Eine weitere Ausgestaltung der Erfindung sieht vor, dass alle ersten Spulen eine übereinstimmende erste Windungszahl und alle zweiten Spulen eine übereinstimmende zweite Windungszahl aufweisen.

Dadurch werden alle ersten Spulen und alle zweiten Spulen jeweils gleich ausgebildet, was die Herstellung weiter vereinfacht.

Eine erste Weitergestaltung dieser Ausgestaltung sieht vor, dass die erste Windungszahl doppelt so groß wie die zweite Windungszahl ist.

Dadurch können die ersten Nuten und zweiten Nuten gleich gestaltet werden, da die ersten Spulen doppelt so groß wie die zweiten Spulen sind, wenn die einzelnen Windungen der ersten und zweiten Spulen gleich gestaltet sind.

Bei der vorgenannten Weitergestaltung wird vorzugsweise jede erste Spule in den ersten Nuten, durch die sie verläuft, mittels einer in diese ersten Nuten eingebrachten Stabilisierungsmasse stabilisiert. Als Stabilisierungsmasse wird dabei vorzugsweise ein Epoxidharz verwendet.

Diese Weitergestaltung berücksichtigt, dass die ersten Nuten keine Trennwände aufweisen, so dass bei gleichartig gestalteten Nuten und gleichartig gestalteten Windungen der ersten und zweiten Spulen in den ersten Nuten jeweils ein Leerraum entsteht, wenn die Windungszahl der ersten Spulen genau doppelt so groß wie die Windungszahl der zweiten Spulen ist. Die Stabilisierungsmasse dient der Ausfüllung dieses Leerraums zur Stabilisierung der ersten Spulen in den ersten Nuten.

Eine alternative Weitergestaltung sieht vor, dass die erste Windungszahl mehr als doppelt so groß wie die zweite Windungszahl ist.

Dadurch können die ersten Spulen durch Zusatzwindungen vergrößert werden, so dass in den ersten Nuten keine Leerräume entstehen. Die Zusatzwindungen können außerdem vorteilhaft einen Wicklungsfaktor eines Ständernutzfeldes verbessern und eine Stromasymmetrie der Wicklungsanordnung verringern, wie unten näher erläutert wird.

Bei dem erfindungsgemäßen Verfahren zur Herstellung eines erfindungsgemäßen Hauptelements werden alle Spulen wenigstens eines Wicklungsstrangs gleichzeitig in Nuten eingezogen.

Wie oben bereits ausgeführt wurde, können dadurch Aufwand und Kosten der Herstellung eines Hauptelements erheblich reduziert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch und ausschnittsweise ein erstes Ausführungsbeispiel eines Hauptelements einer elektrischen Maschine,
- FIG 2: einen Teilzonenplan einer Wicklungsanordnung,
- FIG 3: einen Zonenplan einer Wicklungsanordnung,
- FIG 4: ein Wicklungsschema einer Wicklungsanordnung,
- FIG 5: schematisch und ausschnittsweise ein zweites Ausführungsbeispiel eines Hauptelements einer elektrischen Maschine,
- FIG 6: ein Wicklungsfaktorspektrum eines Ständerraumfeldes des in Figur 1 dargestellten ersten Ausführungsbeispiels,
- FIG 7: ein Wicklungsfaktorspektrum eines Ständerraumfeldes des in Figur 5 dargestellten zweiten Ausführungsbeispiels, und
- FIG 8: normalisierte Kupferverluste der Wicklungsanordnungen der in den Figuren 1 und 5 dargestellten Ausführungsbeispiele.

Einander entsprechende Teile sind in allen Figuren mit den gleichen Bezugszeichen versehen.

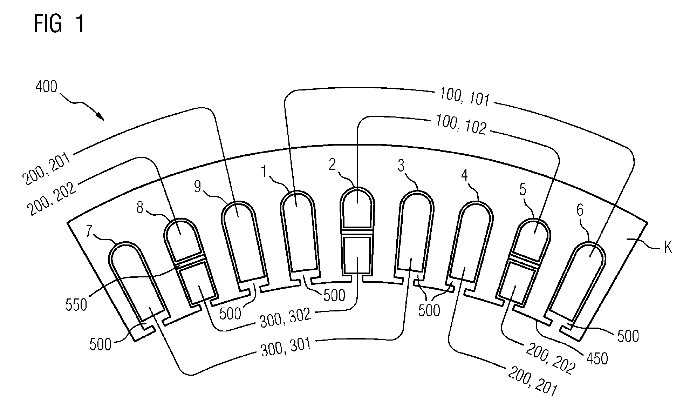

Figur 1 zeigt schematisch einen Ausschnitt eines ersten Ausführungsbeispiels eines Hauptelements 400 einer dreiphasigen elektrischen Maschine in einer Schnittdarstellung. Das Hauptelement 400 dieses Ausführungsbeispiels ist als ein Stator der elektrischen Maschine ausgebildet und weist eine Wicklungsanordnung mit drei Wicklungssträngen 100, 200, 300 und einen als Ständerblechpaket ausgebildeten Wickelkern K mit Nuten 1 bis 9 auf. Das Ständerblechpaket ist dabei vorzugsweise als Blechpaket-Eisenkern ausgebildet.

Das Hauptelement 400 weist einen im Wesentlichen kreisringförmigen Querschnitt auf, von dem in Figur 1 nur ein Ausschnitt dargestellt ist, der ein Sechstel des gesamten Querschnitts ausmacht. Die Nuten 1 bis 9 befinden sich in einer der Längsachse des Hauptelements 400 zugewandten Oberfläche 450 einer Ständerbohrung des Wickelkerns K, sind zu der Ständerbohrung hin offen oder halb geschlossen, verlaufen jeweils in einer bezüglich der Längsachse des Hauptelements 400 radialen Richtung, und sind äquidistant nebeneinander entlang einer um die Längsachse des Hauptelements 400 verlaufenden Kreislinie in der Oberfläche 450 angeordnet.

Jeder Wicklungsstrang 100, 200, 300 weist mehrere miteinander verschaltete elektrische Spulen 101, 102, 201, 202, 301, 302 auf, die jeweils durch zwei Nuten 1 bis 9 des Wickelkerns K verlaufen.

Jede Nut 1 bis 9 ist entweder eine erste Nut 1, 3, 4, 6, 7, 9, durch die genau eine Spule 101, 102, 201, 202, 301, 302 verläuft, oder eine zweite Nut 2, 5, 8, durch die genau zwei Spulen 101, 102, 201, 202, 301, 302 verlaufen. Jede Spule 101, 102, 201, 202, 301, 302 ist entweder eine erste Spule 101, 201, 301, die durch genau zwei verschiedene erste Nuten 1, 3, 4, 6, 7, 9 verläuft, oder eine zweite Spule 102, 202, 302, die durch genau zwei verschiedene zweite Nuten 2, 5, 8 verläuft.

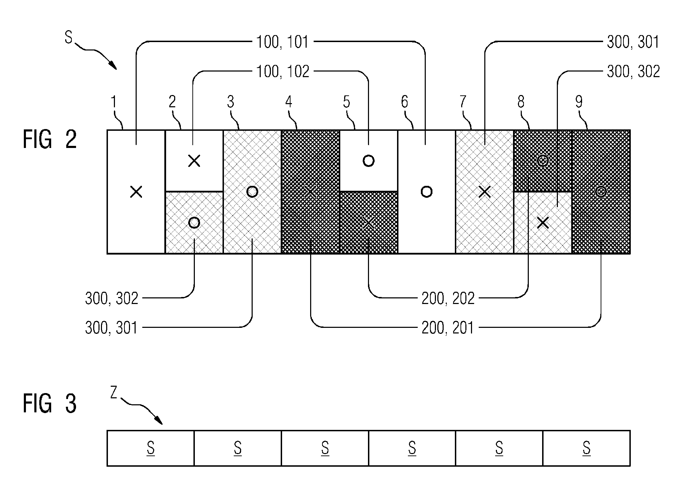

Die genaue Verteilung der Spulen 101, 102, 201, 202, 301, 302 auf die Nuten 1 bis 9 wird im Folgenden anhand der Figuren 2 bis 4 beschrieben.

Die Figuren 2 und 3 zeigen einen Zonenplan Z der Wicklungsanordnung des in Figur 1 teilweise dargestellten Hauptelements 400. Der Zonenplan Z besteht gemäß Figur 3 aus sechs identischen Teilzonenplänen S, die hintereinander angeordnet sind und jeweils neun Nuten 1 bis 9 darstellen. Figur 2 zeigt einen Teilzonenplan S. Die Kreuze und Kreise in dem Teilzonenplan S deuten die Richtungen an, in denen die Nuten 1 bis 9 entlang der Wicklungsstränge 100, 200, 300 von den Windungen der zugehörigen Spulen 101, 102, 201, 202, 301, 302 durchlaufen werden, wobei ein Kreuz eine in die Zeichenebene hinein weisende Richtung angibt und ein Kreis eine aus der Zeichenebene heraus weisende Richtung angibt.

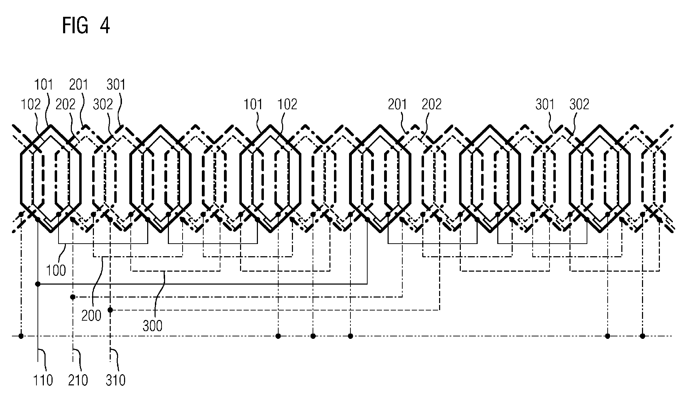

Figur 4 zeigt ein dem in den Figuren 2 und 3 dargestellten Zonenplan Z entsprechendes Wicklungsschema der Wicklungsanordnung des in Figur 1 teilweise dargestellten Hauptelements 400. Dargestellt sind auch eine elektrische Verschaltung der Spulen 101, 102, 201, 202, 301, 302 und drei Außenleiter 110, 210, 310, die jeweils mit einem der Wicklungsstränge 100, 200, 300 verbunden sind.

Jede erste Spule 101, 201, 301 eines jeden Wicklungsstrangs 100, 200, 300 verläuft durch ein Nutenpaar zweier erster Nuten 1, 3, 4, 6, 7, 9, zwischen denen genau zwei zweite Nuten 2, 5, 8, durch die eine zweite Spule 102, 202, 302 desselben Wicklungsstrangs 100, 200, 300 verläuft, und genau zwei weitere erste Nuten 1, 3, 4, 6, 7, 9 liegen. Dabei liegen die beiden weiteren ersten Nuten 1, 3, 4, 6, 7, 9 wiederum zwischen den beiden zweiten Nuten 2, 5, 8. Durch die beiden weiteren ersten Nuten 1, 3, 4, 6, 7, 9 verläuft dabei jeweils eine erste Spule 101, 201, 301 eines der beiden anderen Wicklungsstränge 100, 200, 300, wobei diese beiden ersten Spulen 101, 201, 301 verschiedenen Wicklungssträngen 100, 200, 300 angehören.

Im Einzelnen bilden die ersten Nuten 1, 6 eines jeden Teilzonenplans S ein Nutenpaar, durch das eine erste Spule 101 eines ersten Wicklungsstrangs 100 verläuft. Die ersten Nuten 4, 9 eines jeden Teilzonenplans S bilden ein Nutenpaar, durch das eine erste Spule 201 eines zweiten Wicklungsstrangs 200 verläuft. Eine erste Nut 7 eines jeden Teilzonenplans S und eine erste Nut 3 des sich rechts an diesen Teilzonenplan S anschließenden Teilzonenplans S bilden ein Nutenpaar, durch das eine erste Spule 301 des dritten Wicklungsstrangs 300 verläuft.

Jede zweite Spule 102 des ersten Wicklungsstrangs 100 verläuft durch die zweiten Nuten 2, 5 eines Teilzonenplans S. Jede zweite Spule 202 des zweiten Wicklungsstrangs 200 verläuft durch die zweiten Nuten 5, 8 eines Teilzonenplans S. Jede zweite Spule 302 des dritten Wicklungsstrangs 300 verläuft durch die zweite Nut 8 eines Teilzonenplans S und die zweite Nut 2 des sich rechts an diesen Teilzonenplan S anschließenden Teilzonenplans S.

Dabei bildet jede zweite Spule 102 des ersten Wicklungsstrangs 100 die Unterschichten der beiden zweiten Nuten 2, 5, durch die sie verläuft. Jede zweite Spule 202 des zweiten Wicklungsstrangs 200 bildet eine Oberschicht einer zweiten Nut 5, durch die sie verläuft, und eine Unterschicht der anderen zweiten Nut 8, durch die sie verläuft. Jede zweite Spule 302 des dritten Wicklungsstrangs 300 bildet die Oberschichten der beiden zweiten Nuten 2, 8, durch die sie verläuft (die Unterschichten der zweiten Nuten 2, 5, 8 sind in Figur 2 oberhalb der Oberschichten dargestellt). Die Unterschicht und die Oberschicht einer jeden zweiten Nut 2, 5, 8 sind durch eine elektrisch isolierende Trennwand 550 voneinander getrennt.

Alle ersten Spulen 101, 201, 301 weisen eine übereinstimmende erste Windungszahl auf und alle zweiten Spulen 102, 202, 302 weisen eine übereinstimmende zweite Windungszahl auf. Die erste Windungszahl ist in diesem ersten Ausführungsbeispiel doppelt so groß wie die zweite Windungszahl. Ferner sind alle Spulen 101, 102, 201, 202, 301, 302 aus einem Runddraht übereinstimmenden Durchmessers gefertigt. Daher ist jede erste Spule 101, 201, 301 doppelt so groß wie eine zweite Spule 102, 202, 302. Außerdem sind alle Nuten 1 bis 9 gleich ausgebildet. Die zweiten Spulen 102, 202, 302 und die Trennwände 550 sind derart bemessen, dass die Volumina der zweiten Nuten 2, 5, 8 durch die in ihnen verlaufenden zweiten Spulen 102, 202, 302 und durch die Trennwände 550 jeweils ausgefüllt werden. In den ersten Nuten 1, 3, 4, 6, 7, 9 entstehen daher infolge der dort fehlenden Trennwände 550 Leerräume 500. Diese Leerräume 500 werden jeweils durch eine Stabilisierungsmasse, vorzugsweise durch ein Epoxidharz ausgefüllt, um die ersten Spulen 101, 201, 301 in den ersten Nuten 1, 3, 4, 6, 7, 9 zu stabilisieren.

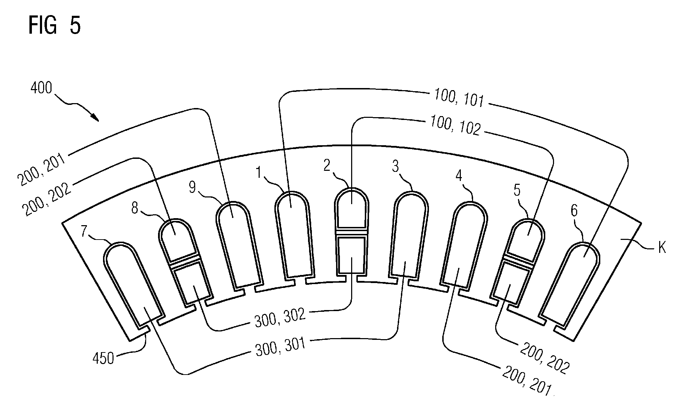

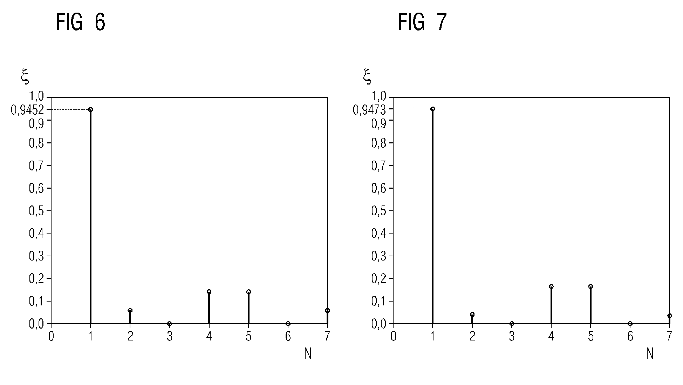

Figur 5 zeigt ein zweites Ausführungsbeispiels eines Hauptelements 400. Dieses Ausführungsbeispiel unterscheidet sich von dem anhand der Figuren 1 bis 4 beschriebenen ersten Ausführungsbeispiel lediglich dadurch, dass die ersten Spulen 101, 201, 301 jeweils eine Windungszahl aufweisen, die mehr als doppelt so groß wie die Windungszahl der zweiten Spulen 102, 202, 302 ist und so bemessen ist, dass die ersten Spulen 101, 201, 301 jeweils eine erste Nut 1, 3, 4, 6, 7, 9 vollständig ausfüllen. Mit anderen Worten entfallen die in Figur 1 dargestellten Leerräume 550 in den ersten Nuten 1, 3, 4, 6, 7, 9 und werden durch Zusatzwindungen der ersten Spulen 101, 201, 301 ersetzt. Dadurch werden einerseits die ersten Spulen 101, 201, 301 in den ersten Nuten 1, 3, 4, 6, 7, 9 vorteilhaft ohne eine zusätzliche Stabilisierungsmasse stabilisiert. Andererseits bewirken die Zusatzwindungen der ersten Spulen 101, 201, 301 gegenüber dem ersten Ausführungsbeispiel Verbesserungen, die im Folgenden anhand der Figuren 6 bis 8 beschrieben werden.

Figur 6 zeigt in einem Diagramm ein Wicklungsfaktorspektrum eines Wicklungsfaktors ξ eines Ständerraumfeldes des in Figur 1 dargestellten ersten Ausführungsbeispiels für Raumwellen verschiedener Ordnungszahlen N.

Figur 7 zeigt analog zu Figur 6 ein Wicklungsfaktorspektrum eines Wicklungsfaktors ξ des Ständerraumfeldesdes in Figur 5 dargestellten zweiten Ausführungsbeispiels für Raumwellen verschiedener Ordnungszahlen N. Der Vergleich mit Figur 6 zeigt, dass das zweite Ausführungsbeispiel hinsichtlich des Wicklungsfaktorspektrums gegenüber dem ersten Ausführungsbeispiel leicht verbessert ist.

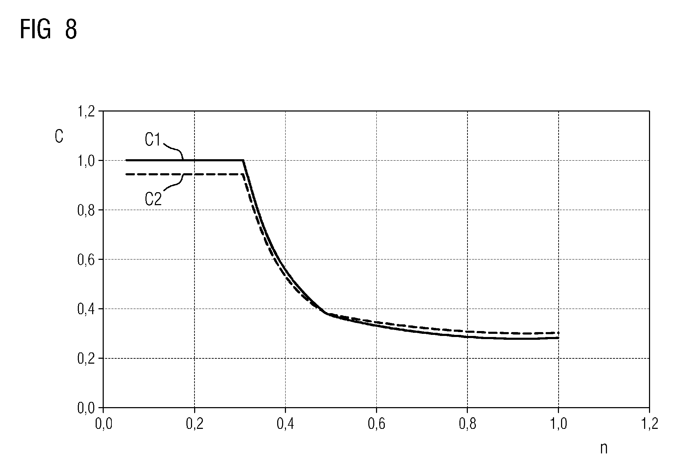

Figur 8 zeigt normalisierte Kupferverluste C der Wicklungsanordnungen der in den Figuren 1 und 5 dargestellten Ausführungsbeispiele in Abhängigkeit von einer normalisierten Drehzahl n. Dabei zeigt ein erster Kupferverlustverlauf C1 die Kupferverluste C des in Figur 1 dargestellten ersten Ausführungsbeispiels und ein zweiter Kupferverlustverlauf C2 zeigt die Kupferverluste C des in Figur 5 dargestellten zweiten Ausführungsbeispiels. Die Wicklungsanordnungen beider Ausführungsbeispiele weisen durch die Verteilung der ersten Spulen 101, 201, 301 eine Asymmetrie auf, die infolge des Nutstreueffekts asymmetrische Strangströme in den Wicklungssträngen 100, 200, 300 verursachen kann. Figur 8 zeigt, dass diese Stromasymmetrie bei dem zweiten Ausführungsbeispiel geringer als bei dem ersten Ausführungsbeispiel ausfällt. Auch dies ist eine Folge und vorteilhafte Auswirkung der Zusatzwindungen der ersten Spulen 101, 201, 301 des zweiten Ausführungsbeispiels.

Die Wicklungsanordnungen beider Ausführungsbeispiele werden jeweils hergestellt, indem zunächst alle Spulen 101, 102 des ersten Wicklungsstrangs 100 gleichzeitig in die jeweils zugehörigen Nuten 1, 2, 5, 6 eingezogen werden. Danach werden Trennwände 550 in die zweiten Nuten 2, 5 eingebracht, durch die eine zweite Spule 102 des ersten Wicklungsstrangs 100 verläuft. Anschließend werden alle Spulen 201, 202 des zweiten Wicklungsstrangs 200 gleichzeitig in die jeweils zugehörigen Nuten 4, 5, 8, 9 eingezogen. Danach werden Trennwände 550 in die zweiten Nuten 8 eingebracht, die noch keine Trennwände 550 aufweisen. Anschließend werden alle Spulen 301, 302 des dritten Wicklungsstrangs 300 gleichzeitig in die jeweils zugehörigen Nuten 2, 3, 7, 8 eingezogen. Im Fall des ersten Ausführungsbeispiels wird abschließend noch die Stabilisierungsmasse in die Leerräume 500 der ersten Nuten 1, 3, 4, 6, 7, 9 eingebracht. Dieses Herstellungsverfahren wird durch die oben beschriebene Verteilung erster Spulen 101, 201, 301 und zweiter Spulen 102, 202, 302 auf erste Nuten 1, 3, 4, 6, 7, 9 und zweite Nuten 2, 5, 8 ermöglicht.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Da der in den Figuren 2 und 3 dargestellte Zonenplan Z aus jeweils gleichen Teilzonenplänen S mit jeweils neun Nuten 1 bis 9 besteht, können die anhand der Figuren 1 bis 5 beschriebenen Ausführungsbeispiele insbesondere in offensichtlicher Weise zu weiteren Ausführungsbeispielen von Hauptelementen 400 mit einer Nutenanzahl, die ein beliebiges Vielfaches von Neun ist, abgewandelt werden.

## Patentansprüche

1. Hauptelement (400) einer elektrischen Maschine, umfassend mehrere Wicklungsstränge (100, 200, 300) mit elektrisch leitfähig miteinander verbundenen elektrischen Spulen (101, 102, 201, 202, 301, 302) und einen Wickelkern (K) mit nebeneinander aufgereihten Nuten (1 bis 9), durch die Spulen (101, 102, 201, 202, 301, 302) der Wicklungsstränge (100, 200, 300) verlaufen, wobei
- der Wickelkern (K) erste Nuten (1, 3, 4, 6, 7, 9), durch die jeweils genau eine Spule (101, 102, 201, 202, 301, 302) verläuft, und zweite Nuten (2, 5, 8), durch die jeweils genau zwei verschiedene Spulen (101, 102, 201, 202, 301, 302) verlaufen, aufweist,
- jede Spule (101, 102, 201, 202, 301, 302) eines jeden Wicklungsstrangs (100, 200, 300) entweder eine erste Spule (101, 201, 301), die durch zwei erste Nuten (1, 3, 4, 6, 7, 9) verläuft, oder eine zweite Spule (102, 202, 302), die durch zwei zweite Nuten (2, 5, 8) verläuft, ist,
- und jeder Wicklungsstrang (100, 200, 300) wenigstens eine erste Spule (101, 201, 301) und wenigstens eine zweite Spule (102, 202, 302) aufweist.

2. Hauptelement (400) nach Anspruch 1,
**gekennzeichnet durch** genau drei Wicklungsstränge (100, 200, 300), wobei
- jede zweite Spule (102) eines ersten Wicklungsstrangs (100) die Unterschichten der beiden zweiten Nuten (2, 5), **durch** die sie verläuft, bildet,
- jede zweite Spule (202) eines zweiten Wicklungsstrangs (200) eine Oberschicht einer der beiden zweiten Nuten (5, 8), **durch** die sie verläuft, und eine Unterschicht der anderen der beiden zweiten Nuten (5, 8), **durch** die sie verläuft, bildet,
- und jede zweite Spule (302) des dritten Wicklungsstrangs (300) die Oberschichten der beiden zweiten Nuten (2, 8), **durch** die sie verläuft, bildet.

3. Hauptelement (400) nach Anspruch 1,
**gekennzeichnet durch** genau drei Wicklungsstränge (100, 200, 300), wobei
- jede zweite Spule (102) eines ersten Wicklungsstrangs (100) eine Oberschicht einer der beiden zweiten Nuten (2, 5), **durch** die sie verläuft, und eine Unterschicht der anderen der beiden zweiten Nuten (2, 5), **durch** die sie verläuft, bildet,
- jede zweite Spule (202) eines zweiten Wicklungsstrangs (200) eine Oberschicht einer der beiden zweiten Nuten (5, 8), **durch** die sie verläuft, und eine Unterschicht der anderen der beiden zweiten Nuten (5, 8), **durch** die sie verläuft, bildet,
- und jede zweite Spule (302) des dritten Wicklungsstrangs (300) eine Oberschicht einer der beiden zweiten Nuten (2, 8), **durch** die sie verläuft, und eine Unterschicht der anderen der beiden zweiten Nuten (2, 8), **durch** die sie verläuft, bildet.

4. Hauptelement (400) nach Anspruch 2 oder 3,
**dadurch gekennzeichnet, dass**
- jede erste Spule (101, 201, 301) eines jeden Wicklungsstrangs (100, 200, 300) durch ein Nutenpaar zweier erster Nuten (1, 3, 4, 6, 7, 9) verläuft, zwischen denen mindestens zwei weitere erste Nuten (1, 3, 4, 6, 7, 9) und mindestens zwei zweite Nuten (2, 5, 8) liegen,
- und jede zweite Spule (102, 202, 302) eines jeden Wicklungsstrangs (100, 200, 300) durch zwei zweite Nuten (2, 5, 8) verläuft, die zwischen zwei ersten Nuten (1, 3, 4, 6, 7, 9) eines Nutenpaares liegen, durch das eine erste Spule (101, 201, 301) desselben Wicklungsstrangs (100, 200, 300) verläuft.

5. Hauptelement (400) nach einem der Ansprüche 2 bis 4, **dadurch gekennzeichnet, dass** die weiteren ersten Nuten (1, 3, 4, 6, 7, 9), die zwischen den beiden ersten Nuten (1, 3, 4, 6, 7, 9) eines Nutenpaares liegen, durch das eine erste Spule (101, 201, 301) eines Wicklungsstrangs (100, 200, 300) verläuft, jeweils zwischen den beiden zweiten Nuten (2, 5, 8) liegen, die zwischen den beiden ersten Nuten (1, 3, 4, 6, 7, 9) des Nutenpaares liegen, und von ersten Spulen (101, 201, 301) zweier verschiedener Wicklungsstränge (100, 200, 300) durchlaufen werden, wobei sich diese Wicklungsstränge (100, 200, 300) von demjenigen Wicklungsstrang (100, 200, 300) unterscheiden, dem die das Nutenpaar durchlaufende erste Spule (101, 201, 301) angehört.

6. Hauptelement (400) nach einem der vorhergehenden Ansprüche,
**dadurch gekennzeichnet, dass** in jeder zweiten Nut (2, 5, 8) zwischen den beiden zweiten Spulen (102, 202, 302), die durch sie verlaufen, eine elektrisch isolierende Trennwand (550) angeordnet ist.

7. Hauptelement (400) nach einem der vorhergehenden Ansprüche,
**dadurch gekennzeichnet, dass** alle ersten Spulen (101, 201, 301) eine übereinstimmende erste Windungszahl und alle zweiten Spulen (102, 202, 302) eine übereinstimmende zweite Windungszahl aufweisen.

8. Hauptelement (400) nach Anspruch 7,
**dadurch gekennzeichnet, dass** die erste Windungszahl doppelt so groß wie die zweite Windungszahl ist.

9. Hauptelement (400) nach Anspruch 8,
**dadurch gekennzeichnet, dass** jede erste Spule (101, 201, 301) in den ersten Nuten (1, 3, 4, 6, 7, 9), durch die sie verläuft, mittels einer in diese ersten Nuten (1, 3, 4, 6, 7, 9) eingebrachten Stabilisierungsmasse stabilisiert ist.

10. Hauptelement (400) nach Anspruch 9,
**dadurch gekennzeichnet, dass** die Stabilisierungsmasse ein Epoxidharz ist.

11. Hauptelement (400) nach Anspruch 7,
**dadurch gekennzeichnet, dass** die erste Windungszahl mehr als doppelt so groß wie die zweite Windungszahl ist.

12. Verfahren zur Herstellung eines Hauptelements (400) nach einem der vorhergehenden Ansprüche, wobei alle Spulen (101, 102, 201, 202, 301, 302) wenigstens eines Wicklungsstrangs (100, 200, 300) gleichzeitig in Nuten (1 bis 9) eingezogen werden.
